# EUROPÄISCHE PATENTANMELDUNG

(11) **EP 2 251 237 A2**
(43) Veröffentlichungstag der Anmeldung: **17.11.2010**
(21) Anmeldenummer: 10174181.7
(22) Anmeldetag: 29.01.2007
(51) Int. Cl.: B60T 11/26

(54) **Ausgleichsbehälter für eine Betätigungsvorrichtung**

(30) Priorität: 30.01.2006 DE 102006004210
(62) Teilanmeldung aus: 07703103.7
(71) Anmelder: GUSTAV MAGENWIRTH GmbH & Co., D-72574 Bad Urach (DE)
(72) Erfinder: Ruopp, Michael, 89180, Berghülen (DE)
(74) Vertreter: Friese, Martin

(57) **Zusammenfassung**

Die Erfindung betrifft einen Ausgleichsbehälter (30) für eine Betätigungsvorrichtung mit einer Verbindungsbohrung (70) und einer damit verbundenen Anschlussbohrung (71), wobei der Durchgang (72) von der Anschlussbohrung (71) zu der Verbindungsbohrung (72) seitlich von der Mitte der Anschlussbohrung (71) angeordnet ist.

## Beschreibung

Die Erfindung betrifft einen Ausgleichsbehälter gemäß dem Oberbegriff von Anspruch 1.

Ein Ausgleichsbehälter gemäß dem Oberbegriff von Anspruch 1 ist aus der EP 0 894 703 B1 bekannt.

Der bekannte Stand der Technik hat den Nachteil, dass er aufwendig aufgebaut und relativ teuer herzustellen ist.

Der Erfindung liegt daher die Aufgabe zugrunde, einen Ausgleichsbehälter gemäß dem Oberbegriff von Anspruch 1 anzugeben, die bzw. der einfach aufgebaut, leicht herstellbar und leicht anbringbar ist.

Die Aufgabe der Erfindung wird mit einem Ausgleichsbehälter gemäß den Merkmalen von zumindest einem der unabhängigen Ansprüche gelöst. Vorteilhafte Ausgestaltungen der Erfindung sind in den abhängigen Ansprüchen angegeben.

Die erfindungsgemäßen Ausgleichsbehälter können gleichermaßen vorteilhaft für hydraulische Bremsanlagen oder hydraulische Kupplungen bevorzugt im Motorrad- oder Fahrradbereich eingesetzt werden. Prinzipiell ist die Erfindung hauptsächlich auf Fahrzeuge mit Lenkern gerichtet.

Gemäß einer Ausführung der Erfindung wird eine Betätigungsvorrichtung für eine hydraulische Fahrzeughandbremse oder Kupplungseinrichtung angegeben, mit einer Armatur, die einen Geberzylinder und einen Befestigungsabschnitt zur Anordnung an einem Lenker aufweist, einem Ausgleichsbehälter für Hydraulikflüssigkeit, und Befestigungsmitteln zum Befestigen des Ausgleichsbehälters an der Armatur, wobei der Ausgleichsbehälter um eine Schwenkachse verschwenkbar ist, derart, dass der Ausgleichsbehälter innerhalb eines Verschwenkbereichs in verschiedenen Ausrichtungen relativ zu der Armatur an der Armatur befestigbar ist.

Zusätzlich oder alternativ zu den Merkmalen betreffend die Verschwenkbarkeit können die Befestigungsmittel einen Stutzen und eine Stutzenaufnahme umfassen, wobei zur Befestigung des Ausgleichsbehälters der Stutzen in der Stutzenaufnahme aufgenommen ist. Dabei kann Stutzen in der Stutzenaufnahme um die Schwenkachse verschwenkbar aufgenommen sein. Alternativ oder zusätzlich kann der Stutzen an dem Ausgleichsbehälter und die Stutzenaufnahme an der Armatur angeordnet sein. Es ist auch möglich, dass der Stutzen an der Armatur und die Stutzenaufnahme an dem Ausgleichsbehälter angeordnet ist.

Zusätzlich oder alternativ zu den Merkmalen betreffend die Verschwenkbarkeit kann der Ausgleichsbehälter seitlich an der Armatur befestigt sein.

Bei einigen Ausführungen der Erfindung können die Befestigungsmittel Sicherungsmittel zum Sichern des Ausgleichsbehälters an der Armatur umfassen. Dabei können die Sicherungsmittel vorzugsweise eine Schraube umfassen, die in einem Langloch angeordnet ist, das den Schwenkbereich definiert. Dabei kann die Schraube zur Sicherung des Ausgleichsbehälters an der Armatur in ein Gewinde eingreifen, das an der Armatur ausgebildet ist, und das Langloch an dem Ausgleichsbehälter ausgebildet sein. Alternativ kann auch die Schraube zur Sicherung des Ausgleichsbehälters an der Armatur in ein Gewinde eingreift, das an dem Ausgleichsbehälter ausgebildet ist, und das Langloch an der Armatur ausgebildet ist. Selbstverständlich können auch äquivalente dem Fachmann bekannte Befestigungsmittel entsprechend eingesetzt werden.

Zusätzlich oder alternativ zu den Merkmalen betreffend die Verschwenkbarkeit können die Befestigungsmittel einen Bund aufweisen, der an einer Distanzhülse vorgesehen ist.

Dadurch ergibt sich der Vorteil, dass die Distanzhülse sehr dünnwandig ausgebildet werden kann, wodurch sich eine Einsparung von Gewicht bzw. Bauraum realisieren läßt. Außerdem kann sich gegebenenfalls eine leichtere Verstellbarkeit des Ausgleichsbehälters ergeben.

Bei einer Ausführung der Erfindung kann dabei vorzugsweise der Bund eine Abstützfläche für einen Abschnitt des Ausgleichsbehälters bieten. Das hat den Vorteil, dass der Bund über die Fläche der Armatur hinausragen kann, an der er sich abstützt. Es ergibt sich somit eine Vergrößerung der Abstützfläche, und nur ein kleinerer Bauraum wird benötigt.

Bei einigen Ausführungen der Erfindung können die Befestigungsmittel eine Distanzhülse umfassen. Dabei kann die Distanzhülse die Schraube zur Sicherung bzw. das entsprechende Sicherungsmittel umgeben. Vorteilhafterweise kann die Distanzhülse eine Wandstärke von 2/10 bis 20/10 mm, vorzugsweise 2/10 bis 10/10 mm, insbesondere vorzugsweise von ungefähr 4/10 mm aufweisen. Bei diesen Ausführungen ergibt sich der Vorteil, dass sie an bestehende Armaturen passen können bzw. dass relativ wenig Bauraum erforderlich ist.

Bei einigen Ausführungen der Erfindung kann der Verschwenkbereich einen Winkelbereich von 0 bis 90 Grad, vorzugsweise von 0 bis 45 Grad, insbesondere vorzugsweise von 0 bis 30 Grad, und bevorzugt von 0 bis ungefähr 21 Grad umfassen.

Bei einigen Ausführungen der Erfindung kann die relative Ausrichtung zwischen der Armatur und dem Ausgleichsbehälter innerhalb des Verschwenkbereichs stufenlos einstellbar sein.

Bei einigen Ausführungen der Erfindung kann die relative Ausrichtung zwischen der Armatur und dem Ausgleichsbehälter innerhalb des Verschwenkbereichs in einer bestimmten Anzahl von Einstellungen einstellbar sein. Dabei können mindestens 2, vorzugsweise mindestens 3, insbesondere vorzugsweise mindestens 5, mindestens 7 oder mindestens 10 Einstellungen vorgesehen sein. Dabei können vorzugsweise die Einstellungen durch Rastierungen definiert sein. Weiter können dabei vorzugsweise die Einstellungen durch eine Kontur definiert sein, die Bogenabschnitte umfasst, die in den Einstellungen einen Schraubenkopf der Befestigungsmittel aufnehmen. Beispielsweise können 3 Rastierungen, entsprechend drei Einstellungen durch 3 aufeinanderfolgende Radien, vorgesehen sein, die vorzugsweise am Ausgleichsbehälter ausgebildet sind. Alternativ können die Rastierungen auch an der Armatur ausgebildet sein, wenn die Befestigungsmittel in den Ausgleichsbehälter eingreifen.

Bei einigen Ausführungen der Erfindung kann die Armatur eine schrägradiale Armatur sein. Dabei kann der Neigungswinkel der schrägradialen Armatur ungefähr 5 bis 20 Grad und vorzugsweise ungefähr 10 Grad betragen.

Gemäß einer Ausführung der Erfindung wird ein Ausgleichsbehälter für eine Betätigungsvorrichtung mit einer Verbindungsbohrung und einer damit verbundenen Anschlussbohrung angegeben, wobei der Durchgang von der Anschlussbohrung zu der Verbindungsbohrung seitlich von der Mitte der Anschlussbohrung vorgesehen ist.

Zusätzlich oder alternativ zu den Merkmalen betreffend die Anordnung des Durchgangs kann der Ausgleichsbehälter zur seitlichen Befestigung an der Armatur ausgelegt und ausgebildet sein.

Zusätzlich oder alternativ zu den Merkmalen betreffend die Anordnung des Durchgangs kann die Anschlussbohrung an ihrem der Befestigungsseite des Ausgleichsbehälters abgewandten Ende eine Stufe aufweisen, in der der Durchgang zu der Verbindungsbohrung vorgesehen ist. Dabei kann die Stufe in Richtung ihres der Befestigungsseite des Ausgleichsbehälters abgewandten Endes vorzugsweise eine erhöhte Neigung aufweisen. Das hat den Vorteil, dass beim Spritzgießen kein Grat im Durchgang stehenbleibt, weil ein hoher Druck zwischen den beiden Kernen (dem Kern für die Verbindungsbohrung und dem Kern für die Anschlussbohrung) aufrechterhalten werden kann. Der Kern der Verbindungsbohrung rutscht auf dem Kern der Anschlussbohrung ab und von der Befestigungsseite weg. Der hohe Druck verhindert das Entstehen eines Grates, der nach dem Entformen stehenbleiben könnte. Ein Arbeitsschritt zum Entfernen eines etwaigen Grates, der den Durchgang blockiert, entfällt.

Bei einigen Ausführungen der Erfindung kann die Stufe einen ersten Abschnitt mit einer ersten Neigung und einen zweiten Abschnitt mit einer zweiten Neigung aufweisen, die größer als die erste Neigung ist. Dabei kann die Anschlussbohrung vorzugsweise im wesentlichen kegelstumpfförmig ausgebildet sein und die Neigung des ersten Abschnitts der Stufe ungefähr der Neigung der Anschlussbohrung entsprechen.

Alternativ oder zusätzlich kann die Neigung des zweiten Abschnitts der Stufe in Richtung des der Befestigungsseite des Ausgleichsbehälters abgewandten Endes der Stufe eine zunehmende Steigung aufweisen. Entsprechend kann zusätzlich oder alternativ auch die Neigung des ersten Abschnitts der Stufe in Richtung des der Befestigungsseite des Ausgleichsbehälters abgewandten Endes der Stufe eine zunehmende Steigung aufweisen. Alternativ oder zusätzlich kann die Neigung des ersten Abschnitts der Stufe ungefähr 2 bis 5 Grad und vorzugsweise ungefähr 2 bis 3 Grad betragen. Alternativ oder zusätzlich kann die Neigung des zweiten Abschnitts der Stufe ungefähr 3 bis 30 Grad, vorzugsweise ungefähr 7 bis 20 Grad und insbesondere vorzugsweise 10 bis 15 Grad betragen.

Zusätzlich oder alternativ zu den Merkmalen betreffend die Anordnung des Durchgangs kann der Ausgleichsbehälter einen Fortsatz aufweisen, an dem ein Stutzen zur Befestigung an einer Armatur angeordnet ist. Dabei kann der Stutzen einen Abschnitt geringeren Durchmessers zur Aufnahme eines Dichtungslement aufweisen. Dabei kann an dem der Befestigungsseite des Ausgleichsbehälters zugewandten Endes des Abschnitts geringeren Durchmessers eine Erweiterung größeren Durchmessers vorgesehen sein. Dabei kann der Durchmesser der Erweiterung relativ zu dem Durchmesser des Abschnitts geringeren Durchmessers derart bemessen sein, dass einerseits die Erweiterung bei einem Spritzgussverfahren zur Herstellung des Ausgleichbehälters zwangsentformbar ist und andererseits ein Dichtungselement durch die Erweiterung relativ verliersicher auf dem Abschnitt geringeren Durchmessers anordbar ist. Das hat den Vorteil, dass kein separater Arbeitsgang erforderlich ist, um eine verliersichere Aufnahme für das Dichtungselement zu schaffen. Das Dichtungselement kann zur Montage des Ausgleichsbehälters auf diesem angeordnet werden. Das Dichtungselement wird relativ verliersicher gehalten, d.h. auf jeden Fall ausreichend sicher für die Montage.

Bei einigen Ausführungen der Erfindung kann ein Langloch zur Aufnahme einer Schraube zur Sicherung des Ausgleichsbehälters an einer Armatur vorgesehen sein.

Zusätzlich oder alternativ zu den Merkmalen betreffend die Anordnung des Durchgangs kann der Ausgleichsbehälter einen Fortsatz und eine daran angeordnete Versteifungsrippe aufweisen, wobei die Verbindungsbohrung in der Versteifungsrippe vorgesehen ist.

Zusätzlich oder alternativ zu den Merkmalen betreffend die Anordnung des Durchgangs kann der Ausgleichsbehälter eine Einstellvorrichtung zur Einstellung der relativen Ausrichtung des Ausgleichsbehälters an der Betätigungsvorrichtung innerhalb eines Verschwenkbereichs in einer bestimmten Anzahl von Einstellungen aufweisen. Dabei können mindestens 2, vorzugsweise mindestens 3, insbesondere vorzugsweise mindestens 5, mindestens 7 oder mindestens 10 Einstellungen vorgesehen sein. Alternativ oder zusätzlich können die Einstellungen durch Rastierungen definiert sein. Dabei können die Einstellungen durch eine Kontur definiert sein, die Bogenabschnitte umfasst, die in den Einstellungen einen Schraubenkopf von Befestigungsmitteln zur Befestigung des Ausgleichsbehälters an der Betätigungsvorrichtung aufnehmen.

Einige Ausführungen der Erfindung betreffen auch erfindungsgemäße Betätigungsvorrichtungen mit einem erfindungsgemäßen Ausgleichsbehälter.

Die Erfindung wird im folgenden anhand des in den Figuren gezeigten Ausführungsbeispiels näher beschrieben.
- Fig. 1: zeigt eine Betätigungsvorrichtung mit einem erfindungsgemäßen Ausgleichsbehälter von vorne in einer Einstellung des Schwenkwinkels.
- Fig. 1A: zeigt die Betätigungsvorrichtung von Fig. 1 in einer anderen Einstellung des Schwenkwinkels.
- Fig. 2: zeigt eine Schrägansicht der Betätigungsvorrichtung von Fig. 1.
- Fig. 3: zeigt eine Seitenansicht der Betätigungsvorrichtung von Fig. 1.
- Fig. 4: zeigt die Betätigungsvorrichtung von Fig. 1 mit demontierten Ausgleichsbehälter von vorne.
- Fig. 5: zeigt die Betätigungsvorrichtung von Fig. 1 mit demontierten Ausgleichsbehälter von oben.
- Fig. 6: zeigt eine Schrägansicht des demontierten Ausgleichsbehälters von Fig. 1 von schräg hinten.
- Fig. 7: zeigt den demontierten Ausgleichsbehälter von Fig. 1 von hinten.
- Fig. 8: zeigt eine Schrägansicht des demontierten Ausgleichsbehälters von Fig. 1 von schräg vorne.
- Fig. 9: zeigt eine Schnittansicht durch den demontierten Ausgleichsbehälter von Fig. 1.
- Fig. 10: zeigt eine Seitenansicht des demontierten Ausgleichsbehälters von Fig. 1 ohne Deckel.
- Fig. 11: zeigt eine Detailansicht des Stutzenbereichs des demontierten Ausgleichsbehälters von Fig. 1.

In der Beschreibung des Ausführungsbeispiels werden folgende Bezugszeichen verwendet:
- 10: Armatur
- 11: Geberzylinder
- 12: Befestigungsabschnitt
- 13: Aufnahme
- 14: Bügel
- 15: Hebel
- 16: Bohrung
- 22: Distanzhülse
- 23: Bund
- 24: Schraube
- 25: Schraubenkopf
- 26: Stutzenaufnahme
- 30: Ausgleichsbehälter
- 31: Zylinderwandung
- 32: Aussengewinde
- 33: Deckel
- 34: Boden
- 35: Rippe
- 36: Rippe
- 37: Membran
- 40: Fortsatz
- 41: Verstärkungsrippe
- 42: Aussparung
- 43: Langloch
- 50: Stutzen
- 51: erster Abschnitt
- 52: zweiter Abschnitt
- 53: Stufe
- 54: Erweiterung
- 56: Dichtungselement (insbesondere O-Ring)
- 60: Kontur
- 61: erster Bogenabschnitt (erste Rastierung)
- 62: zweiter Bogenabschnitt (zweite Rastierung)
- 63: dritter Bogenabschnitt (dritte Rastierung)
- 70: Verbindungsbohrung
- 71: Anschlussbohrung
- 72: Durchgang (von Anschlussbohrung zur Verbindungsbohrung)
- 73: Stufe
- 74: erster Abschnitt
- 75: zweiter Abschnitt

Das gezeigte Ausführungsbeispiel kann gleichermaßen als Betätigungsvorrichtung bzw. Ausgleichsbehälter für eine hydraulische Bremsanlage oder eine hydraulische Kupplung eingesetzt werden. Dargestellt ist das Ausführungsbeispiel an Hand einer Armatur für den rechten Lenkerteil. Ein Ausführungsbeispiel für den linken Lenkerteil erhält man auf bekannte Weise durch einen spiegelverkehrten Aufbau.

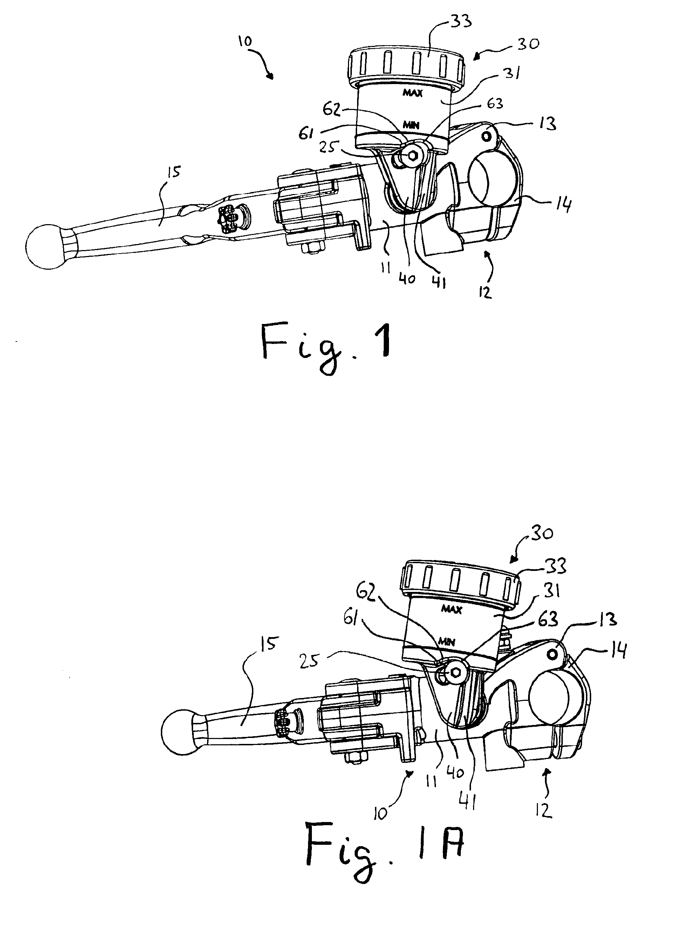

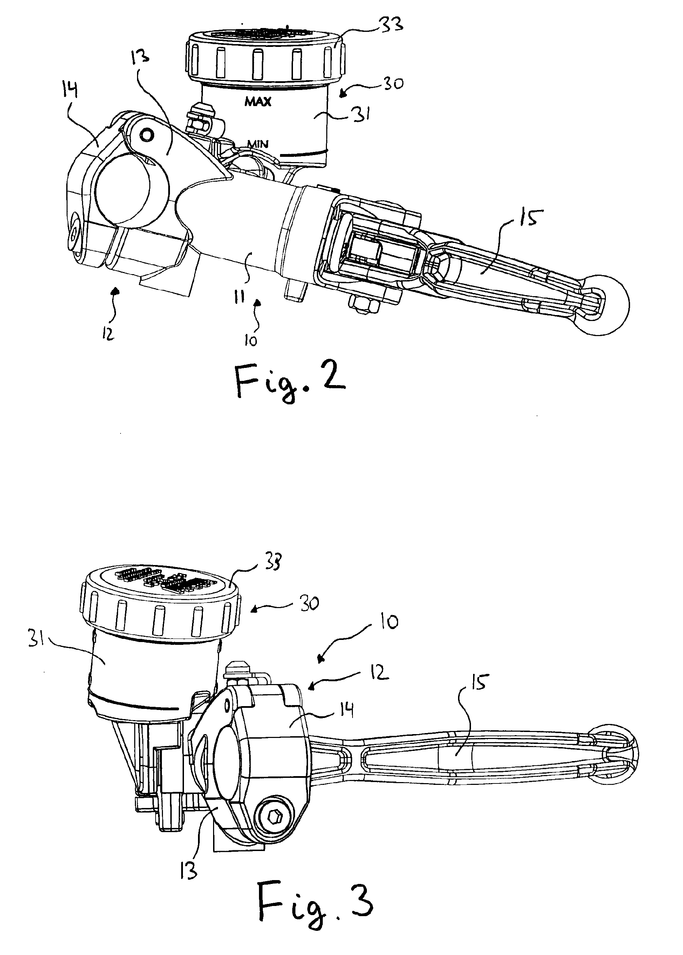

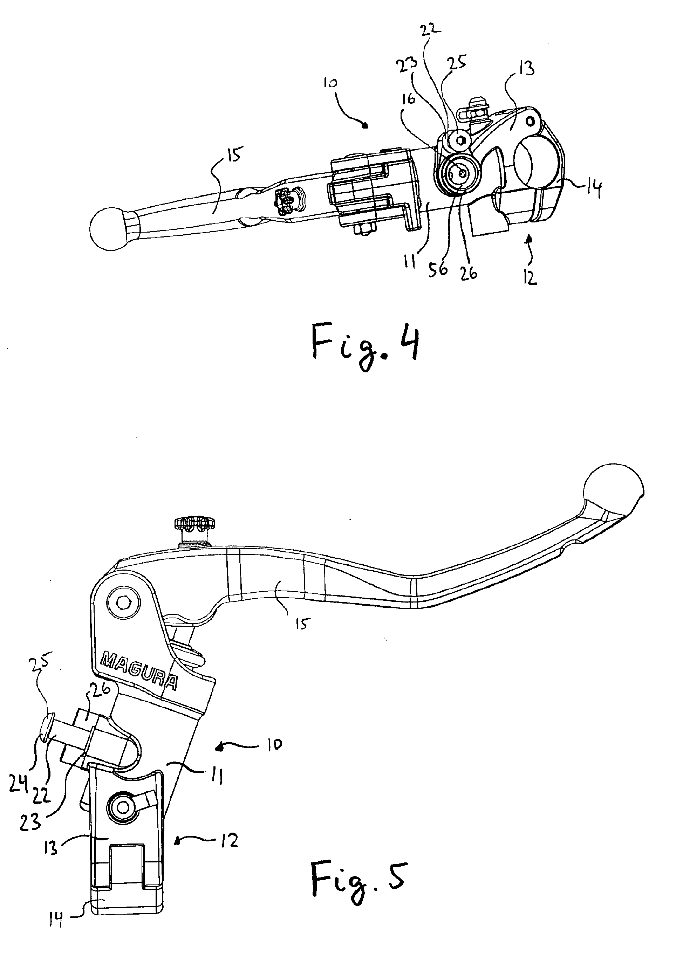

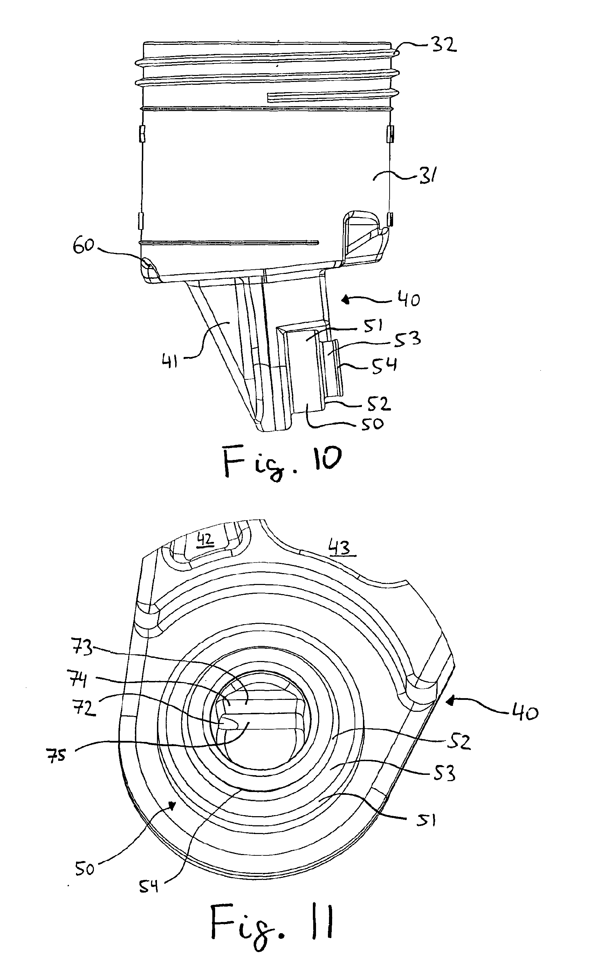

Die Figuren 1 bis 11 zeigen eine Betätigungsvorrichtung für eine hydraulische Fahrzeughandbremse oder Kupplungseinrichtung.

Die Betätigungsvorrichtung umfasst eine Armatur 10, einen Ausgleichsbehälter 30 für Hydraulikflüssigkeit, und Befestigungsmittel zum Befestigen des Ausgleichsbehälters 30 an der Armatur 10.

Die Armatur 10 weist einen Geberzylinder 11 und einen Befestigungsabschnitt 12 zur Anordnung an einem nicht dargestellten Lenker mit einer Aufnahme 13 und einem Bügel 14 auf. Ferner umfasst die Betätigungsvorrichtung einen Hebel 15 zur Betätigung der nicht dargestellten Bremse bzw. Kupplung auf bekannte Weise.

Der Ausgleichsbehälter 30 ist um eine Schwenkachse verschwenkbar, derart, dass der Ausgleichsbehälter 30 innerhalb eines Verschwenkbereichs in verschiedenen Ausrichtungen relativ zu der Armatur 10 an der Armatur 10 befestigbar ist.

Die Befestigungsmittel umfassen einen Stutzen 50 und eine Stutzenaufnahme 26, wobei zur Befestigung des Ausgleichsbehälters 30 der Stutzen 50 in der Stutzenaufnahme 26 aufgenommen ist.

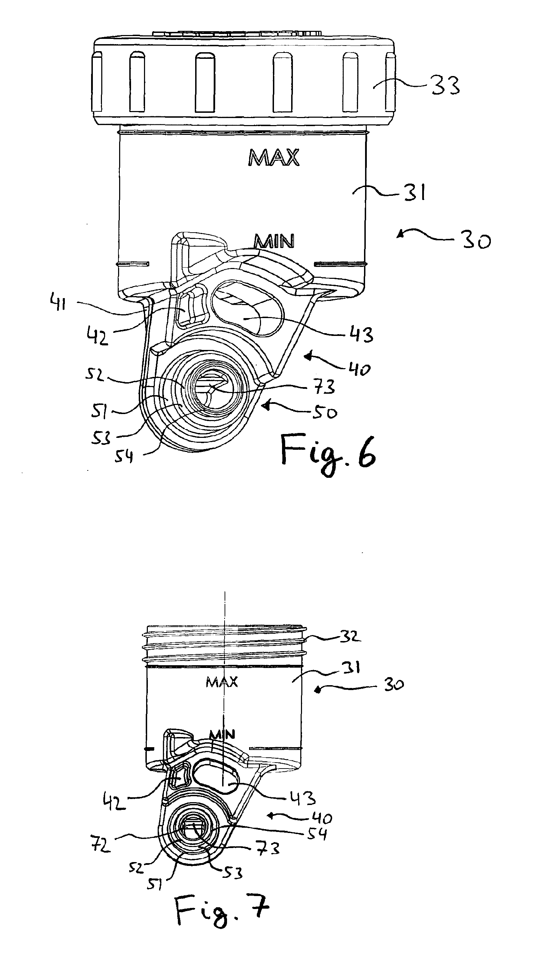

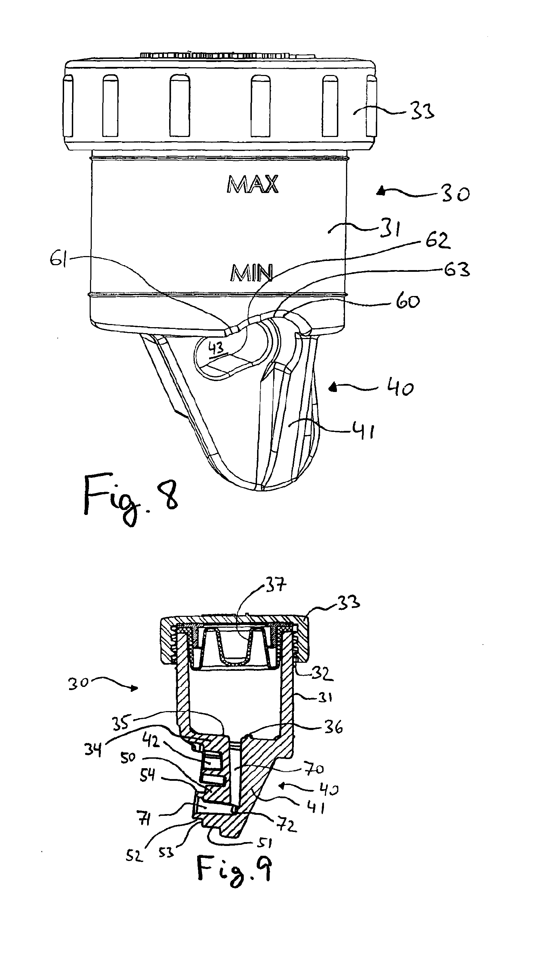

Die Schwenkachse ist im wesentlichen durch die Achse des in den Figuren 6 und 9 besonders deutlich gezeigten Stutzens 50 bzw. der Stutzenaufnahme 26 definiert, die den Stutzen zur Befestigung des Ausgleichsbehälters 30 im wesentlichen konzentrisch aufnimmt.

Der Stutzen 50 ist in der Stutzenaufnahme 26 um die Schwenkachse verschwenkbar aufgenommen. Bei dem gezeigten Ausführungsbeispiel ist der Stutzen 50 an dem Ausgleichsbehälter 30 und die Stutzenaufnahme 26 an der Armatur 10 angeordnet. Bei einer nicht gezeigten Ausführung könnte der Stutzen auch an der Armatur und die Stutzenaufnahme an dem Ausgleichsbehälter angeordnet sein.

Der Ausgleichsbehälter 30 ist seitlich an der Armatur 10 befestigt. Das ist bislang noch nicht bekannt und bietet den Vorteil, dass der Ausgleichsbehälter 30 gemäß dem gezeigten Ausführungsbeispiel verschwenkbar ausgebildet werden kann.

Die Befestigungsmittel umfassen Sicherungsmittel zum Sichern des Ausgleichsbehälters an der Armatur. Die Sicherungsmittel umfassen eine Schraube 24, die in einem Langloch 43 angeordnet ist, das den Schwenkbereich definiert.

Bei dem gezeigten Ausführungsbeispiel greift die Schraube 24 zur Sicherung des Ausgleichsbehälters 30 an der Armatur 10 in ein Gewinde ein, das an der Armatur 10 ausgebildet ist. Das Langloch 43 ist an dem Ausgleichsbehälter 30 ausgebildet.

Gemäß einem nicht gezeigten Ausführungsbeispiel kann die Schraube zur Sicherung des Ausgleichsbehälters an der Armatur auch in ein Gewinde eingreifen, das an dem Ausgleichsbehälter ausgebildet ist, und das Langloch kann entsprechend an der Armatur ausgebildet sein.

Die Befestigungsmittel weisen einen Bund 23 auf, der an der Distanzhülse 22 vorgesehen ist, die die Schraube 24 umgibt. Das hat den Vorteil, dass die Distanzhülse sehr dünnwandig ausgebildet werden kann, wodurch Gewicht bzw. Bauraum eingespart werden kann. Außerdem ergibt sich eine leichtere Verstellbarkeit des Ausgleichsbehälters 30. Der Bund 23 bietet eine Abstützfläche für einen Abschnitt des Ausgleichsbehälters 30.

Insbesondere kann der Bund 23 über die Fläche der Armatur 10 hinausragen, an der er sich abstützt. Dadurch ergibt sich eine Vergrößerung der Abstützfläche und ein kleinerer Bauraum.

Die Distanzhülse weist eine Wandstärke von 2/10 bis 20/10 mm, vorzugsweise 2/10 bis 10/10 mm, insbesondere vorzugsweise von ungefähr 4/10 mm auf. Durch die geringe Wandstärke ergibt sich der Vorteil, dass die Betätigungsvorrichtung an bestehende Armaturen anpassbar ist, insbesondere wenn wenig Bauraum zur Verfügung steht. Selbstverständlich kann die Distanzhülse auch eine größere Wandstärke aufweisen. Bei großen Wandstärken kann beispielsweise auf den Bund verzichtet werden.

Der Verschwenkbereich umfasst einen Winkelbereich von 0 bis 90 Grad, vorzugsweise von 0 bis 45 Grad, insbesondere vorzugsweise von 0 bis 30 Grad, und bevorzugt von 0 bis ungefähr 21 Grad.

Bei einem nicht gezeigten Ausführungsbeispiel ist die relative Ausrichtung zwischen der Armatur und dem Ausgleichsbehälter innerhalb des Verschwenkbereichs stufenlos einstellbar. Bei dem gezeigten Ausführungsbeispiel ist die relative Ausrichtung zwischen der Armatur 10 und dem Ausgleichsbehälter 30 innerhalb des Verschwenkbereichs in einer bestimmten Anzahl von Einstellungen einstellbar. Dazu sind 3 Einstellungen vorgesehen, die durch Rastierungen

Definiert sind. Selbstverständlich können auch mehr oder weniger Einstellungen vorgesehen werden. Die Einstellungen sind durch eine Kontur 60 definiert, die Bogenabschnitte 61, 62, 63 umfasst, die in den Einstellungen einen Schraubenkopf 25 der Befestigungsmittel aufnehmen. Bei dem Ausführungsbeispiel sind 3 Rastierungen, entsprechend drei Einstellungen durch 3 aufeinanderfolgende Radien vorgesehen, die am Ausgleichsbehälter 30 ausgebildet sind.

Die gezeigte Betätigungsvorrichtung umfasst eine schrägradiale Armatur. Der Neigungswinkel der schrägradialen Armatur beträgt ungefähr 10 Grad, kann aber auch 5 bis 20 Grad betragen.

Der Ausgleichsbehälter 30 umfasst eine Verbindungsbohrung 70 und eine damit verbundene Anschlussbohrung 71, die über eine Bohrung 16 auf bekannte Weise mit dem Geberzylinder in Verbindung steht. Der Durchgang 72 von der Anschlussbohrung 71 zu der Verbindungsbohrung 70 ist seitlich von der Mitte der Anschlussbohrung 71 vorgesehen.

Die Anschlussbohrung 71 weist an ihrem der Befestigungsseite des Ausgleichsbehälters 30 abgewandten Ende eine Stufe 73 auf, in der der Durchgang 72 zu der Verbindungsbohrung 70 vorgesehen ist. Die Stufe 73 weist in Richtung ihres der Befestigungsseite des Ausgleichsbehälters 30 abgewandten Endes eine erhöhte Neigung auf. Dadurch ergibt sich der Vorteil bei der Herstellung gemäß dem Spritzgussverfahren, insofern kein Grat im Durchgang stehenbleibt, weil ein hoher Druck zwischen den beiden Kernen für die Verbindungsbohrung 70 bzw. die Anschlussbohrung 71 aufrechterhalten werden kann. Der Kern für die Verbindungsbohrung 70 rutscht auf dem Kern für die Anschlussbohrung 71 ab und von der Befestigungsseite weg. Der hohe Druck verhindert das Entstehen eines Grates. Ein Arbeitsschritt zum Entfernen eines etwaigen Grates, der den Durchgang blockiert, entfällt.

Die Stufe 73 weist einen ersten Abschnitt 74 mit einer ersten Neigung und einen zweiten Abschnitt 75 mit einer zweiten Neigung auf, die größer als die erste Neigung ist. Der Durchgang 72 ist an der Seite des zweiten Abschnitts 75 vorgesehen.

Die Anschlussbohrung 71 ist im wesentlichen kegelstumpfförmig ausgebildet und die Neigung des ersten Abschnitts 74 der Stufe 75 entspricht ungefähr der Neigung der Anschlussbohrung 71. Die Neigung des zweiten Abschnitts 75 der Stufe 73 weist in Richtung des der Befestigungsseite des Ausgleichsbehälters 30 abgewandten Endes der Stufe 73 eine zunehmende Steigung auf. Die Neigung kann aber auch gleichbleibend sein.

Die Neigung des ersten Abschnitts 74 der Stufe 73 beträgt ungefähr 2 bis 3 Grad, kann aber auch beispielsweise 0 bis 5 Grad betragen.

De Neigung des zweiten Abschnitts 75 der Stufe 73 beträgt ungefähr 10 bis 15 Grad, kann aber auch beispielsweise ungefähr 3 bis 30 Grad bzw. ungefähr 7 bis 20 Grad betragen.

Der Ausgleichsbehälter 30 weist einen Fortsatz 40 auf, an dem der Stutzen 50 zur Befestigung an der Armatur 10 angeordnet ist. Der Stutzen weist ersten Abschnitt 51 und einen zweiten Abschnitt 52 geringeren Durchmessers zur Aufnahme eines Dichtungslement 56 (insbesondere O-Rings) auf. Zwischen dem ersten Abschnitt 51 und dem zweiten Abschnitt 52 ist eine Stufe 53 ausgebildet. An dem der Befestigungsseite des Ausgleichsbehälters 30 zugewandten Endes des zweiten Abschnitts 52 geringeren Durchmessers ist eine Erweiterung 54 größeren Durchmessers vorgesehen. Der Durchmesser der Erweiterung 54 relativ zu dem Durchmesser des zweiten Abschnitts 52 geringeren Durchmessers ist derart bemessen ist, dass einerseits die Erweiterung 54 bei einem Spritzgussverfahren zur Herstellung des Ausgleichbehälters 30 zwangsentformbar ist und andererseits ein Dichtungselement 56 durch die Erweiterung 54 relativ verliersicher auf dem zweiten Abschnitt 52 geringeren Durchmessers anordbar ist. Das hat den Vorteil, dass kein separater Arbeitsgang erforderlich ist, um eine verliersichere Aufnahme für das Dichtungselement 56 auszubilden. Das Dichtungselement 56 kann zur Montage des Ausgleichsbehälters 30 auf diesem angeordnet werden. Das Dichtungselement 56 wird relativ verliersicher gehalten, d.h. auf jeden Fall ausreichend sicher für die Montage des Ausgleichbehälters.

In dem Ausgleichsbehälter 30 ist ein Langloch 43 zur Aufnahme der Schraube 24 zur Sicherung des Ausgleichsbehälters 30 an der Armatur 10 vorgesehen.

Der Ausgleichsbehälter 30 weist einen Fortsatz 40 und eine daran angeordnete Versteifungsrippe 41 auf, wobei die Verbindungsbohrung 70 in der Versteifungsrippe 41 vorgesehen ist.

Der Ausgleichsbehälter 30 ist im übrigen auf bekannte Weise aufgebaut. Er weist eine Zylinderwandung 31, ein Aussengewinde 32 zur Aufnahme eines Deckels 33, einen Boden 34, Rippen 35 und 36 sowie eine Membran 37 auf. Die Funktion und Arbeitsweise eines Ausgleichsbehälters und der Betätigungsvorrichtung ist dem Fachmann im übrigen bekannt.

## Patentansprüche

1. Ausgleichsbehälter (30) für eine Betätigungsvorrichtung mit einer Verbindungsbohrung (70) und einer damit verbundenen Anschlussbohrung (71), **dadurch gekennzeichnet, dass** der Durchgang (72) von der Anschlussbohrung (71) zu der Verbindungsbohrung (72) seitlich von der Mitte der Anschlussbohrung (71) angeordnet ist.

2. Ausgleichsbehälter nach Anspruch 1, bei dem der Ausgleichsbehälter (30) zur seitlichen Befestigung an einer Armatur (10) ausgelegt und ausgebildet ist.

3. Ausgleichsbehälter nach einem der Ansprüche 1 oder 2 oder dem Oberbegriff von Anspruch 1, bei dem die Anschlussbohrung (71) an ihrem der Befestigungsseite des Ausgleichsbehälters (30) abgewandten Ende eine Stufe (73) aufweist, in der der Durchgang (72) zu der Verbindungsbohrung (70) angeordnet ist.

4. Ausgleichsbehälter nach Anspruch 3, bei dem die Stufe (73) in Richtung ihres der Befestigungsseite des Ausgleichsbehälters (30) abgewandten Endes eine erhöhte Neigung aufweist, und/oder bei dem die Stufe (73) einen ersten Abschnitt (74) mit einer ersten Neigung und einen zweiten Abschnitt (75) mit einer zweiten Neigung aufweist, die größer als die erste Neigung ist.

5. Ausgleichsbehälter nach Anspruch 4, bei dem die Anschlussbohrung (71) im wesentlichen kegelstumpfförmig ausgebildet ist und die Neigung des ersten Abschnitts (74) der Stufe ungefähr der Neigung der Anschlussbohrung (71) entspricht.

6. Ausgleichsbehälter nach Anspruch 4 oder 5, bei dem die Neigung des zweiten Abschnitts (75) der Stufe in Richtung des der Befestigungsseite des Ausgleichsbehälters (30) abgewandten Endes der Stufe (73) eine zunehmende Steigung aufweist und/oder bei dem die Neigung des ersten Abschnitts (74) der Stufe (73) ungefähr 2 bis 5 Grad, vorzugsweise ungefähr 2 bis 3 Grad beträgt.

7. Ausgleichsbehälter nach einem der Ansprüche 4 bis 6, bei dem die Neigung des zweiten Abschnitts (75) der Stufe (73) ungefähr 3 bis 30 Grad, vorzugsweise ungefähr 7 bis 20 Grad und insbesondere vorzugsweise 10 bis 15 Grad beträgt.

8. Ausgleichsbehälter nach einem der Ansprüche 1 bis 7 oder dem Oberbegriff von Anspruch 1 mit einem Fortsatz (40), an dem ein Stutzen (50) zur Befestigung an einer Armatur (10) angeordnet ist, wobei der Stutzen (50) einen Abschnitt (53) geringeren Durchmessers zur Aufnahme eines Dichtungselementes (56) aufweist.

9. Ausgleichsbehälter nach Anspruch 8, bei dem an dem der Befestigungsseite des Ausgleichsbehälters (30) zugewandten Endes des Abschnitts (53) geringeren Durchmessers eine Erweiterung (51) größeren Durchmessers vorgesehen ist.

10. Ausgleichsbehälter nach Anspruch 9, bei dem der Durchmesser der Erweiterung (51) relativ zu dem Durchmesser des Abschnitts (53) geringeren Durchmessers derart bemessen ist, dass einerseits die Erweiterung (51) bei einem Spritzgussverfahren zur Herstellung des Ausgleichbehälters (30) zwangsentformbar ist und andererseits ein Dichtungselement (56) durch die Erweiterung verliersicher auf dem Abschnitt (53) geringeren Durchmessers anordbar ist.

11. Ausgleichsbehälter nach einem der Ansprüche 1 bis 10, bei dem ein Langloch (43) zur Aufnahme einer Schraube (24) zur Sicherung des Ausgleichsbehälters (30) an einer Armatur (10) vorgesehen ist.

12. Ausgleichsbehälter nach einem der Ansprüche 1 bis 11 mit einem Fortsatz (40) und einer daran angeordneten Versteifungsrippe (41), bei dem die Verbindungsbohrung (70) in der Versteifungsrippe (41) vorgesehen ist.

13. Ausgleichsbehälter nach einem der Ansprüche 1 bis 12 oder dem Oberbegriff von Anspruch 1 mit einer Einstellvorrichtung zur Einstellung der relativen Ausrichtung des Ausgleichsbehälters (30) an der Betätigungsvorrichtung innerhalb eines Verschwenkbereichs in einer bestimmten Anzahl von Einstellungen, wobei mindestens 2, vorzugsweise mindestens 3, insbesondere vorzugsweise mindestens 5, mindestens 7 oder mindestens 10 Einstellungen vorgesehen sind.

14. Ausgleichsbehälter nach Anspruch 13, bei der die Einstellungen durch Rastierungen (61, 62, 63) definiert sind.

15. Ausgleichsbehälter nach einem der Ansprüche 1 bis 14, bei der die Einstellungen durch eine Kontur (60) definiert sind, die Bogenabschnitte (61, 62, 63) umfasst, die in den Einstellungen einen Schraubenkopf (25) von Befestigungsmitteln (24) zur Befestigung des Ausgleichsbehälters (30) an der Betätigungsvorrichtung aufnehmen.
